# EUROPEAN PATENT SPECIFICATION

(11) **EP 2 989 681 B1**
(45) Date of publication and mention of the grant of the patent: **25.03.2020**
(21) Application number: 13721418.5
(22) Date of filing: 24.04.2013
(51) Int. Cl.: H01Q 1/30, H01Q 9/16, H01Q 9/40

(54) **TRACKING DEVICE**
VERFOLGUNGSVORRICHTUNG
DISPOSITIF DE POURSUITE

(43) Date of publication of application: 02.03.2016
(73) Proprietor: Fugro N.V., 2264 SG Leidschendam (NL)
(72) Inventor: JONGSMA, Arnoud Marc, NL-2141 BV Vijfhuizen (NL)
(74) Representative: Nederlandsch Octrooibureau
(86) International application number: PCT/NL2013/050308
(87) International publication number: WO 2014/175725

(56) References cited:
- JP-A- H09 159 494
- US-A1- 2007 247 382
- US-A1- 2009 109 114
- US-A1- 2013 009 832
- B. RAMA RAO ET AL: "Ferrite loaded UHF sleeve monopole integrated with a GPS patch antenna for a handset", MICROWAVE AND OPTICAL TECHNOLOGY LETTERS, vol. 54, no. 11, 24 August 2012 (2012-08-24), pages 2513-2516, XP055093868, ISSN: 0895-2477, DOI: 10.1002/mop.27102

## Description

### BACKGROUND OF THE INVENTION

### 1. Field of the Invention

The present invention relates to tracking devices and more particularly to remote tracking devices of the type that are capable of identifying their position and broadcasting it to a receiver located at another location using radio waves. The invention further relates to a tracking device communication system including such a tracking device and to a radio antenna configuration therefore.

### 2. Description of the Related Art

Tracking devices may be used in many different contexts. The advent of GPS positioning technology and high performance electronics and software has greatly improved the versatility of such devices. In general terms a remote tracking device requires at least some form of positioning system, capable of identifying the location of the device to the required accuracy. It also requires some form of communication facility, capable of announcing the identified location to the system or device requiring this information. The positioning system and communication facility will depend upon the particular implementation but most frequently the positioning system will be based on GPS or, more generally, GNSS technology. The communication may take place via satellite communication, short range radio, WiFi or the like.

One context where the use of such tracking devices is known is for performing seismic surveys. Mechanically generated sound waves are sent into the earth. As part of this energy is reflected back, measuring sensors are used to record the strength and the time taken by this energy since it was generated until its reflection back to the sensors. This data is then processed using specialized seismic data processing software and transformed into visual images of the subsurface of the earth in the seismic survey area. Such seismic surveys may be carried out for different applications. For instance, they may be used for detecting groundwater. They can be used to check foundations for roads, buildings and large structures, such as bridges. They can be used to assess where coal and minerals are located. One of the most common uses of seismic data is in connection with the exploration, development, and production of offshore oil and gas reserves to map potential and known hydrocarbon-bearing formations and the geologic structures that surround them.

In B. Rama Rao et al, "Ferrite Loaded UHF Sleeve Monopole Integrated with a GPS Patch Antenna for a Handset", Microwave and Optical Technology Letters vol. 54, no. 11, 24 August 2012, pages 2513-2516, a ferrite-loaded UHF sleeve monopole antenna is described, which includes an inner brass rod and a surrounding metal sleeve, and which is co-located with a GPS annular micro-strip antenna on top of a handset to provide communication and navigational capabilities to a user.

US7339852 B2 discloses a system for conducting seismic acquisition operations comprising a buoy, a wireless communication system and a dynamic position locating system which generates a position signal indicating the location of the buoy. Other systems are known from US2012026828 and US2012095629 which describe marine seismic streamers. Position locating systems for this kind of application need to be accurate and therefore the antennas systems should offer high performance. It would be desirable to develop an improved tracking device combining a communication system and a dynamic position locating system having further enhanced performance.

### SUMMARY OF THE INVENTION

According to the invention, there is provided a remote tracking device for issuing a tracking signal containing position related data representing the momentary position of the tracking device, to a user station, the remote tracking device comprising: a GNSS receiver and a GNSS antenna for receiving satellite positioning signals; a processor for converting the satellite positioning signals into position related data; and a UHF transmitter and a UHF antenna for transmitting the tracking signal, the UHF antenna comprising a hollow inner conducting cylinder and an outer conducting cylinder spaced from and encircling the inner conducting cylinder, wherein one or more electronic components selected from the group consisting of: the processor, the GNSS receiver, the UHF transmitter, a UHF receiver, a UHF radio modem, a power supply, a battery, a power converter, a switch and a motor, is located inside the inner conducting cylinder. As a result of this antenna configuration, improved omni-directional vertically polarized transmission characteristics are achievable without compromising the performance of the GNSS antenna. The inner conducting cylinder thus functions as the ground plane for the outer conducting cylinder and the UHF antenna operates substantially as a patch antenna but adapted to broadcast uniformly over its full circumference. The result is a compact tracking device having a UHF antenna with a performance similar to a ½ - wavelength dipole antenna.

Although reference is given to a UHF antenna, it will be understood that this is to be considered in its broadest sense to cover wavelengths suitable for short range transmission over distances up to about 40 km. In this context UHF may cover VHF and some GSM frequencies too, covering frequency ranges 100 MHz to 1000 MHz. Most preferably, the UHF transmitter and antenna may be operational in the range between 300 MHz and 550 MHz, more preferably, between 420 MHz and 470 MHz. The tracking device preferably also has a UHF receiver allowing it to receive signals from a remote location such as the user station or from another tracking device. This may be in the form of satellite orbit and clock or differential correction signals for use in more accurately determining position. The skilled person will recognise that various forms of UHF transmitters and receivers may be provided and that appropriate modulation and demodulation provisions may be included for transmission of the position related data and reception of incoming data. Most preferably, the tracking device is provided with a UHF radio modem configured to send and receive in half duplex mode.

Furthermore, reference to a processor for converting the satellite positioning signals into position related data is intended to refer to any form of processing sufficient to put the positioning signals into condition for further transmission as position related data. The tracking device may thus have on-board processing capability to fully process the GNSS data and any other data such as correction data in order to arrive at a position determination. Alternatively, the tracking device may merely package the raw data received from the GNSS receiver and provide it with identification data for further transmission by the UHF transmitter to the user station. Subsequent processing of the position data may then take place at the user station to determine the position of the tracking device. While reference is given to a processor, it is also understood that this may be one or more separate processors or on-board computers. The same function may also be fulfilled by a processor integrated into either the GNSS receiver, the modem or the UHF transceiver.

In a preferred embodiment, the remote tracking device comprises electronic components, which may be located inside the inner conducting cylinder. Such a configuration provides advantages in terms of space and can also ensure good electromagnetic compatibility (EMC) shielding of these components. The skilled person will be well aware of which components will most require such shielding. Preferably one or more components are contained within the inner conducting cylinder, selected from the group consisting of: the processor, the GNSS receiver, the UHF transmitter, receiver or UHF radio modem, a power supply, a battery, a power converter, a switch and a motor. It will of course be understood that in certain situations components may need to be further shielded from each other and that some of these components may be located outside of the inner conducting cylinder. EMC shielding may also be provided separately from the UHF antenna.

Preferably, the inner conducting cylinder is longer than the outer conducting cylinder and the outer conducting cylinder has a lower rim that is conductively connected to the inner conducting cylinder. More preferably, the inner conducting cylinder is at least 50% longer, most preferably at least twice as long as the outer conducting cylinder. In this context it is noted that although reference is given to cylinders, this is not intended to be limiting only to right circular cylinders. The antenna may have any other shape that makes it suitable for the reception and transmission of radio waves. For example, the antenna may have a slightly conical shape or a slightly pyramidal shape while still maintaining the advantages of good omni-directional transmission with low interference with the GNSS antenna. Furthermore, while the inner conducting cylinder will generally be fully closed in order to ensure good EMC shielding, the outer conducting cylinder may be interrupted at one or more positions around its circumference. In general, the outer conducting cylinder should closely follow the inner conducting cylinder in order to ensure uniform antenna characteristics.

According to a further aspect of the invention, the inner conducting cylinder preferably has closed first and second ends. These should preferably also be conducting in order to further enhance the EMC shielding of the electronics contained therein. In this context, closed is taken to mean closed with respect to electromagnetic radiation having a wavelength likely to disturb the respective antennas. It will be understood that the ends may be provided with holes, in particular to facilitate cooling air circulation to and from the electronics provided within the inner conducting cylinders. Appropriate fans may be provided for this purpose. Alternatively, liquid cooling provisions may be provided. In addition to air passages, the inner conducting cylinder may be provided with exits for other purposes, in particular cables. These too should be provided with appropriate filtering or shielding to avoid electromagnetic interference being picked up by the antennas.

According to a yet further aspect of the invention, the UHF transmitter is arranged to transmit at a wavelength λ and the outer conducting cylinder has an electrical length of λ/4. The skilled person will understand that the actual length will therefore depend upon the nature of the dielectric used. Typically, the outer conducting cylinder will have an electrical length of between 10 cm and 20 cm for operation with wavelengths in the 40cm - 80cm range. The physical length could be less than that depending on the dielectric materials used. The inner conducting cylinder should preferably be at least twice as long as the outer conducting cylinder. In actual fact it may be sized according to the volume required to house the electronic components which it shields. The inner conducting cylinder preferably has a length of between 20 cm and 60 cm, more preferably between 30 cm and about 50 cm. It may have a diameter of between 10 cm and 20 cm. The exact dimensions will depend on design considerations but the outer conducting cylinder may be just slightly larger in diameter than the inner conducting cylinder. The space between these conducting cylinders may be filled with any low-loss dielectric material, air or a vacuum. The spacing between the base of the outer conducting cylinder and that of the inner conducting cylinder will determine the elevation of the radiation pattern. For a radiation pattern elevation closest to zero degrees, both bases may be level. The outer conducting cylinder may be fed at a height above its base according to the impedance required.

As a result of the presently claimed configuration of the UHF antenna, the GNSS antenna may preferably be located at an upper side of the device, in use, and axially aligned with the inner conducting cylinder. The UHF antenna transmits primarily in the radial direction and has a relatively low signal strength in the vertical (axial) direction and thus interference with the GNSS antenna is minimized. The UHF antenna may also be inverted such that the above-mentioned lower rim is actually located upwards at a location closest to the GNSS antenna. Additionally, by axially aligning the GNSS antenna with the UHF antenna, increased accuracy can be achieved without requiring the orientation of the tracking device to be taken into account. For a GNSS positioning system having accuracy approaching 1 cm, the position of the GNSS antenna with respect to a tracking device having a diameter of 15 cm becomes relevant.

The GNSS antenna may be any suitable antenna for receiving satellite positioning signals for either global/absolute or relative position determination. The skilled person will recognize that different position systems may be used including GPS or GLONASS or any system capable of providing dynamic position locating signals. Most preferably, the GNSS receiver and antenna are capable of providing position data leading to a 3D relative positioning accuracy of 3 cm, 1 sigma and a 3D absolute positioning accuracy of 10 cm, 1 sigma for the global position of the tracking device. The GNSS receiver is preferably capable of receiving and tracking dual or triple frequency code and phase observations, ensuring the above described accuracy. It will be understood that in the case of such observations, interference by the UHF transmitter and any other components in the system, should be minimized. The tracking device may also be provided with redundancy and may for instance be provided with a second GNSS receiver capable of tracking the same or different signals.

In a preferred embodiment of the invention, the tracking device further comprises a housing inside which the GNSS receiver, UHF transmitter and processor are located. The device may form a compact independent item that can be easily transported and positioned on an object to be tracked. It may have a weight of less than 20 kg, preferably less than 10 kg and may have a maximum dimension of less than 1.5 m, preferably less than 1 m and most preferably around 60 cm in length. The housing is preferably waterproof and may also be shockproof. In particular, the housing may be arranged to protect its contents against shocks of up to 50 g. In particular for use aboard a gun-float for seismic operations, such resilience may be required in order to protect the electronic components from damage. The housing is of course relatively transparent to electromagnetic waves in the frequency bands relevant to the respective antennas. The housing is also preferably at least partially transparent for visible light and a light source may also be included within the housing. Such a light can provide status signals regarding the functioning of the device and has been shown to be extremely useful in locating the tracking device e.g. at sea during the night. A tracking device having a GNSS receiver and a UHF transmitter within such a translucent housing and provided with a light beacon is considered to be both new and inventive in its own right, independent of the form of the UHF antenna.

In addition to the GNSS antenna and the UHF antenna, the device may be provided with other communication channels for programming or interrogating the device. In particular, a WiFi access point may be provided which may be an IEEE 802.11 WiFi access point or any other suitable type of wireless access point. The WiFi access may be used to configure the unit e.g. by access through a web interface without having to physically connect to it and may also allow direct access to the various components including processors, transmitters and receivers for troubleshooting or maintenance). It can also conveniently be used to download high volume data, including GNSS data, which has been collected during operation. Access to the unit for maintenance, reconfiguration and downloading data at short distances and without having to physically connect is extremely convenient, in particular for use at sea. Not having to connect to a unit out at sea from a small boat, is also safer. A tracking device having a GNSS receiver and a UHF transmitter provided with a WiFi access point is also considered to be both new and inventive in its own right, independent of the form of the UHF antenna. The data exchanged may comprise status or configuration data including but not limited to shock registration (for example maximum shock force in the last 10 minutes, or the total amount of shocks, or the amount of shocks since last reset), or temperature or humidity monitoring, or run time statistics. Such run time statistics may include, for example, the total number of power cycles, the total boot count of CPU, the total run-time, the total operational run-time, the run-time since last power-cycle, the operation run-time since last CPU reset, power consumption or voltage. It will be understood that this data can also be exchanged using the UHF transmitter and/or receiver.

Furthermore, the tracking device may comprise additional connections such as an external power connection providing power to the processor, receiver and transmitter. Alternatively, the device may have its own power source such as a battery that may be rechargeable.

The invention further relates to a system comprising a remote tracking device as described above and hereinafter, together with a user station for receiving the tracking signal from the tracking device and for evaluating the position data to determine the position of the tracking device. Although it has been indicated above that the processor may analyze the satellite position signals and determine the position data, it is not excluded that analysis and the final determination of position may in fact be performed at the user station.

The invention is particularly applicable to wireless gun-float and tail-buoy tracking systems comprising the system or tracking device described above. Such systems are generally well known and may include conventional elements such as streamers, cables, acoustic receivers, tail-buoys and gun-floats. Such systems may benefit from improved accuracy and reduced signal interference when the conventionally used tracking devices are exchanged for those as described above. In particular, the improved use of the available space allows use of a larger and more powerful UHF antenna giving better UHF performance and improved range.

Still further, the invention relates to a UHF antenna, comprising an inner conducting cylinder and an outer conducting cylinder encircling the inner conducting cylinder, wherein the inner conducting cylinder is hollow and the outer conducting cylinder has a lower rim that is conductively connected to the inner conducting cylinder, wherein the UHF antenna further comprises a UHF transmitter and/or receiver located within the inner conducting cylinder. In this context, lower is understood to refer to a usual position of use for transmission in the earth plane. It is not excluded that two such antennas could be axially aligned back to back with each other or even that a number of outer conducting cylinders could be located on the same inner conducting cylinder. The UHF antenna may be as described above or hereinafter. The antenna may be implemented in any situation where omni-directional vertically polarized transmission and/or reception of radio waves is required in a single plane, in particular, for cases where interference with another antenna located out of this plane is to be avoided or reduced. The antenna is compact and provides additional benefits in that the UHF receiver or transmitter and other electronic components may be installed in the interior of the inner conducting cylinder.

It will be appreciated by those skilled in the art that the above-mentioned embodiments, implementations and aspects of the invention may be combined in any way as required and that further modifications and variations of the tracking device and the system can be carried out by a person skilled in the art on the basis of the present invention.

It will furthermore be evident to the skilled reader that, although the emphasis of the description of the invention is on the seismic field, the tracking device of the invention may be used in other fields where remote tracking operations are executed. Without limitation, the technology may be employed: for creating accurate and up-to date maps; in forest industry applications, such as fire prevention and control wherein an integrated GNSS and UHF system may help for identifying and monitoring the exact location of the resources and therefore making appropriate decisions; in harvesting operations wherein the integrated system may provide accurate information on the shape and location of block cuts; for determining activity centres in wildlife management and insect infestation; for precision farming including soil sample collection, chemical application control and harvest yield monitors; for civil engineering applications including monitoring structural deformations, such as dams and bridges; for open-cast mining to improve drilling, shovelling, vehicle tracking and surveying operations; for land and marine seismic surveying including oil and gas exploration e.g. where mapping of the surface geology is required; for airborne and seafloor mapping applications; GNSS for vehicle navigation; and cadastral surveying.

### BRIEF DESCRIPTION OF THE DRAWINGS

The features and advantages of the invention will be appreciated upon reference to the following drawings of a number of exemplary embodiments, in which:
Figure 1 is a diagram illustrating aspects of a tracking device system for acquiring and processing seismic data.
Figure 2 is a cross-section through a conventional tracking device; and
Figure 3 is a cross-section through a tracking device according to the present invention.

### DESCRIPTION OF ILLUSTRATIVE EMBODIMENTS

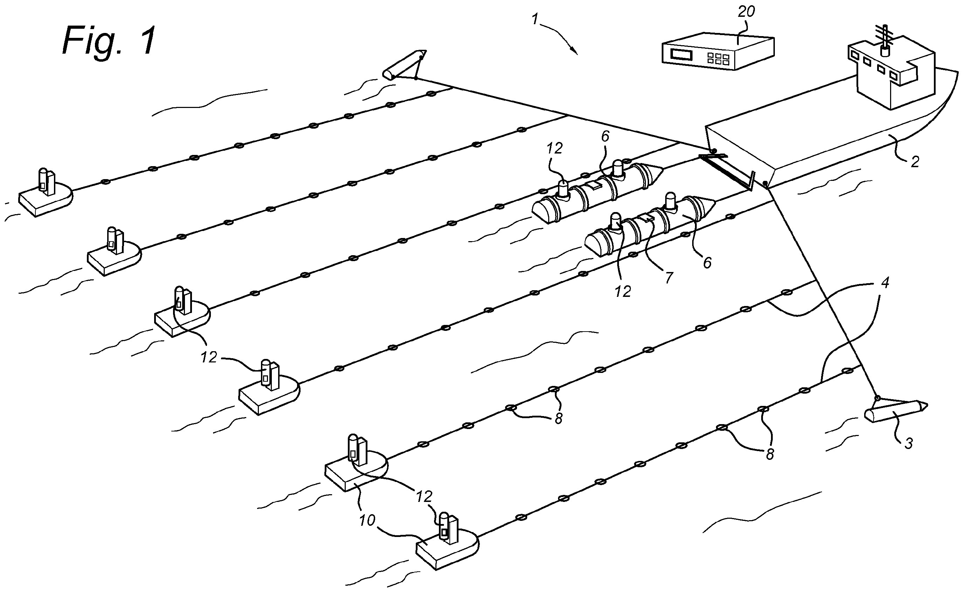

Fig. 1 is a diagram illustrating aspects of a tracking device system 1 for acquiring and processing seismic data in which the present invention may be incorporated.

The system 1 includes a seismic survey vessel 2. Six seismic streamers or cables 4 are towed by the seismic survey vessel 2. The cables 4 are around twelve kilometres in length and are spaced from each other by deflectors 3 and other appropriate steering devices (not shown). Hydrophones or acoustic receivers 8 are carried at intervals along the cables 4 forming an array. Attached at the end of each cable 4, distant from the vessel is a tail-buoy 10. Also towed by the vessel 2 are two gun-floats 6, each provided with a seismic source 7. Remote tracking devices 12 are located on each tail-buoy 10 and on each gun-float 6. A user station 20 is also shown. This will generally be carried on the vessel 2, which will also be provided with additional signalling and communication devices (not shown).

The configuration according to Figure 1 is generally conventional and has been described in various publications, including WO01/55747, US20120095629 and GB2247527. In use, the vessel 2 tows the cables 4 and their receivers 8 over an area being surveyed. The seismic sources 7 are periodically activated to produce acoustic waves which travel through the water and into the underlying seabed. The waves are reflected by undersea formations, subsea deposits or strata back through the water to the receivers 8, where they are converted to electrical signals and recorded. By analysis of the signals, the shape, position and other information can be determined for the undersea formations. At any moment in time, the position of each cable 4 and its receivers 8 can be determined from the position of the tracking device 12 on the respective tail-buoy 10. In a similar manner, the location of the gun-floats 6 and their seismic sources 7 can be determined.

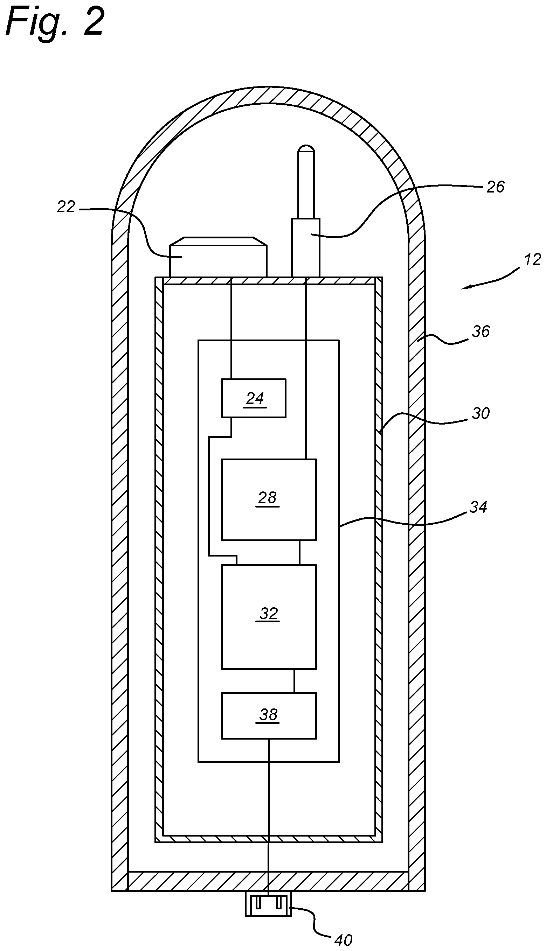

Fig 2 is a schematic cross-section through a conventional tracking device 12 as may be used in a tracking device system 1 as shown in Figure 1. The tracking device is in its upright position as is the case in use.

The tracking device 12 comprises a GNSS antenna 22 and a GNSS receiver 24 configured to receive dynamic position locating signals from a GNSS satellite. The tracking device 12 further comprises a UHF reduced-size ¼ λ helical whip antenna 26 and a UHF transmitter 28 configured to transmit and receive UHF radio signals. The GNSS receiver 24 and the UHF transmitter 28 are located within a EMC shield 30 together with a processor 32 and a power supply 38 on a circuit board 34. The GNSS antenna 22 and the UHF antenna 26 are located side by side at the upper end of the EMC shield 30 where optimal reception is available. The components of the tracking device 12 are housed in a waterproof and shockproof housing 36. A power connector 40 is provided which allows coupling of the power supply 38 to an external power source e.g. aboard the tail-buoy 10. Due to the close proximity of the UHF antenna 26, the sensitivity and accuracy of the GNSS antenna 22 may be adversely affected.

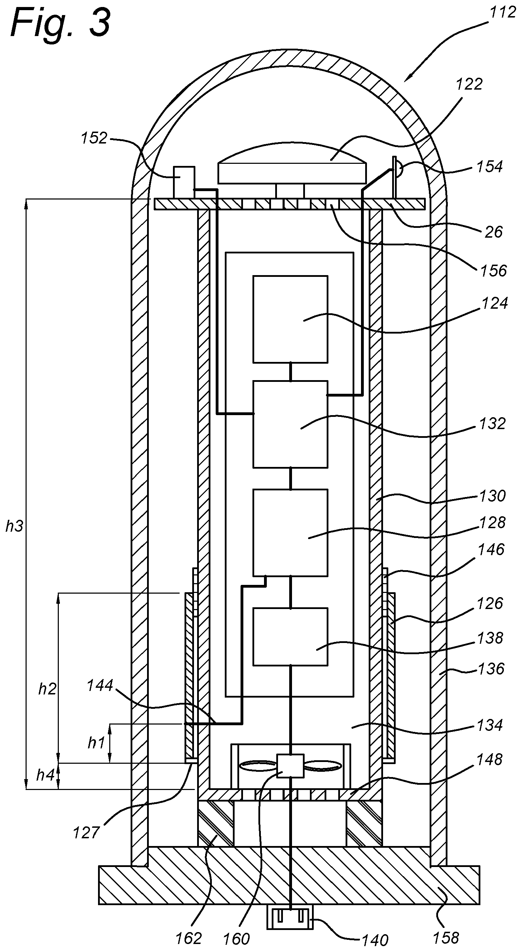

Figure 3 is a schematic cross-section through a tracking device 112 according to the present invention, in which similar components to those of Figure 2 are designated with like numerals preceded by 100.

According to Figure 3, the tracking device 112 comprises a GNSS antenna 122 and a GNSS receiver 124. The tracking device 112 further comprises an inner conducting cylinder 130 which forms an EMC shield, inside which are located a GNSS receiver 124, a UHF transmitter 128, a processor 132 and a power supply 138 on a circuit board 134. Surrounding a lower portion of inner conducting cylinder 130 is an outer conducting cylinder 126. The outer conducting cylinder 126 has a lower rim 127 which is conductively connected to the inner conducting cylinder 130. A spacer 146 of lightweight polystyrene material ensures that the inner and outer cylinders 126, 130 are spaced dielectrically from each other. A signal feed 144 is provided from the UHF transmitter 128 to the outer conducting cylinder 126 at a height h1 from the lower rim 127. The outer conducting cylinder 126 thus acts as an omni-directional, vertically polarized UHF antenna with respect to the inner conducting cylinder 130 providing good transmission in all horizontal directions. The GNSS antenna 122 is located at the closed upper end 150 of the inner conducting cylinder 130 and is relatively unexposed and unaffected by this radiation pattern.

In the exemplary embodiment of Figure 3, the UHF transmitter operates in the 450-470 MHz band and the height h2 of the outer conducting cylinder is adapted to approximately λ/4, namely around 16 cm. The skilled person will be well aware that for operation at other wavelengths alternative dimensions can be provided. In general however, the overall height h3 of the inner conducting cylinder 126 should be significantly greater than the height h2 and preferably at least twice this height. The height h1 of the feed 144 with respect to the lower rim 127 determines the impedance of the feed 144 and can also be adjusted accordingly to match the impedance of the radio modem. Furthermore, the radiation pattern in elevation may be adjusted by varying the distance h4 of the lower rim 127 with respect to the bottom 148 of the inner conducting cylinder 126. For an elevation closest to zero degrees, h4 may be zero.

The components of the tracking device 112 are retained within a housing 136 which is transparent to GNSS and UHF frequencies. The housing 136 has a base 158 which acts as a heat sink and supports a power connector 140 for coupling the power supply to an external power source. Also provided on the closed upper end 150 are a WiFi access point 152 and a LED light 154. The housing 136 is also transparent to electromagnetic waves in the 2.4 GHz frequency range in which the WiFi is operational and is at least partially translucent to visible light allowing the light 154 to act as a beacon. The WiFi access point 152 is operatively connected to the processor 132 to allow interrogation of the processor 132 by an external device such as user station 20 for the purpose of short range data acquisition, trouble-shooting or software upgrades.

As can also be seen in Figure 3, the upper end 150 and the bottom 148 of the inner conducting cylinder 126 are provided with ventilation passages 156. The ventilation passages 156 are of a size whereby EMC shielding is not affected. Cables passing through the upper end 150 and bottom 148 of the inner conducting cylinder are provided with the necessary shielding to prevent electromagnetic interference prejudicial to the respective antennas. Adjacent the bottom 148, a fan 160 is located. The fan 160 is operatively connected to the power supply 138 and controlled by the processor 132 to provide air circulation through the ventilation passages 156 and over the base 158 to cool the components located on the circuit board 134. Between the bottom 148 of the inner conducting cylinder 130 and the base 156 is located a shock absorbing spacer 162 which ensures shock-proofing of the components with respect to impact on the housing 136 and also provides space for air circulation. Additional shock absorbing provisions within the housing 136 are omitted for the sake of clarity.

Thus, the invention has been described by reference to the embodiment discussed above. It will be recognized that this embodiment is susceptible to various modifications and alternative forms well known to those of skill in the art. In particular, while the above techniques have been described in the context of seismic surveying, the invention may also be applied to other situations where tracking is required. Accordingly, although specific embodiments have been described, these are examples only and are not limiting upon the scope of the invention.

## Claims

1. A remote tracking device (112) for issuing a tracking signal containing position related data representing the momentary position of the tracking device, to a user station (20), the remote tracking device comprising:
a GNSS receiver (124) and a GNSS antenna (122) for receiving satellite positioning signals;
a processor (132) for converting the satellite positioning signals into position related data; and
a UHF transmitter (128) and a UHF antenna for transmitting the tracking signal, the UHF antenna comprising an inner conducting cylinder (130) and an outer conducting cylinder (126) spaced from and encircling the inner conducting cylinder;
**characterized in that** the inner conducting cylinder is hollow, and **in that** one or more electronic components selected from the group consisting of the processor (132), the GNSS receiver (124), the UHF transmitter (128), a UHF receiver, a UHF radio modem, a power supply (138), a battery, a power converter, a switch, and a motor, is located inside the inner conducting cylinder (130).

2. The tracking device (112) of claim 1, wherein the inner conducting cylinder (130) is longer than the outer conducting cylinder (126), preferably at least 50% longer, and the outer conducting cylinder has a lower rim (127) that is conductively connected to the inner conducting cylinder.

3. The tracking device (112) of claim 1 or 2, wherein the inner conducting cylinder (130) has closed upper and lower ends.

4. The tracking device (112) of any preceding claim, wherein the UHF transmitter (128) is arranged to transmit at a wavelength λ and the outer conducting cylinder (126) has an electrical length of λ/4.

5. The tracking device (112) of any preceding claim, whereby, in the use position, the GNSS antenna (122) is located at an upper side of the device and axially aligned with the inner conducting cylinder (130).

6. The tracking device (112) of any preceding claim, comprising a housing (136) inside which the GNSS antenna (122) and receiver (124), the UHF antenna and transmitter (128) and the processor (132) are located, wherein the housing preferably is waterproof.

7. The tracking device (112) of any preceding claim, further comprising a WiFi access point (152) for short range data exchange with the device.

8. The tracking device (112) of any preceding claim, wherein the UHF transmitter (128) has an output power of between 100 mW and 10 W.

9. The tracking device (112) of any preceding claim, further comprising an external power connection (140) providing power to the processor (132), receiver and transmitter.

10. A system comprising a tracking device (112) according to any of claims 1 to 9 and further comprising a user station (20) for receiving the tracking signal from the tracking device and for using the position related data.

11. A wireless gun-float and tail-buoy tracking system (1) comprising the system of claim 10 or the tracking device (112) of any of claims 1 to 9.

12. A UHF antenna for a tracking system according to any preceding claim, comprising an inner conducting cylinder (130) and an outer conducting cylinder (126) encircling the inner conducting cylinder, wherein the outer conducting cylinder has a lower rim (127) that is conductively connected to the inner conducting cylinder;
**characterized in that** the inner conducting cylinder (130) is hollow, and **in that** the UHF antenna further comprises a UHF transmitter (128) and/or receiver located within the inner conducting cylinder.

13. The UHF antenna of claim 12, wherein the inner conducting cylinder (130) is at least 50% longer than the outer conducting cylinder (126) and has closed upper and lower ends.

## Patentansprüche

1. Fern-Trackingvorrichtung (112) zum Ausgeben eines Trackingsignals, das positionsbezogene Daten enthält, die die momentane Position der Trackingvorrichtung repräsentieren, an eine Benutzerstation (20), wobei die Fern-Trackingvorrichtung folgendes aufweist:
einen GNSS-Empfänger (124) und eine GNSS-Antenne (122) zum Empfangen von Satellitenpositionssignalen;
einen Prozessor (132) zum Umwandeln der Satellitenpositionssignale in positionsbezogene Daten; und
einen UHF-Sender (128) und eine UHF-Antenne zum Übertragen bzw. Senden des Trackingsignals, wobei die UHF-Antenne einen inneren leitenden Zylinder (130) und einen äußeren leitenden Zylinder (126), der von dem inneren leitenden Zylinder beabstandet ist und diesen umgibt, aufweist;
**dadurch gekennzeichnet, dass** der innere leitende Zylinder hohl ist, und dass eine oder mehrere elektronische Komponente/n ausgewählt sind aus der Gruppe bestehend aus dem Prozessor (132), dem GNSS-Empfänger (124), dem UHF-Sender (128), einem UHF-Empfänger, einem UHF-Funkmodem, einer Stromversorgung (138), einer Batterie, einem Stromwandler, einem Schalter und einem Motor innerhalb des inneren leitendenden Zylinders (130) angeordnet ist/sind.

2. Trackingvorrichtung (112) nach Anspruch 1, wobei der innere leitende Zylinder (130) länger als der äußere leitende Zylinder (126) ist, vorzugsweise um wenigstens 50% länger, und der äußere leitende Zylinder einen unteren Rand (127) aufweist, der leitend mit dem inneren leitenden Zylinder verbunden ist.

3. Trackingvorrichtung (112) nach einem der Ansprüche 1 oder 2, wobei der innere leitende Zylinder (130) geschlossene obere und untere Enden besitzt.

4. Trackingvorrichtung (112) nach einem der vorhergehenden Ansprüche, wobei der UHF-Sender (128) so angeordnet ist, dass er bei einer Wellenlänge λ sendet und der äußere leitende Zylinder (126) eine elektrische Länge von λ/4 hat.

5. Trackingvorrichtung (112) nach einem der vorhergehenden Ansprüche, wobei sich die GNSS-Antenne (122) in der Gebrauchsstellung an einer Oberseite der Vorrichtung befindet und axial mit dem inneren leitenden Zylinder (130) ausgerichtet ist.

6. Trackingvorrichtung (112) nach einem der vorhergehenden Ansprüche, mit einem Gehäuse (136), in dem sich die GNSS-Antenne (122) und -Empfänger (124), die UHF-Antenne und -Sender (128) und der Prozessor (132) befinden, wobei das Gehäuse vorzugsweise wasserdicht ist.

7. Trackingvorrichtung (112) nach einem der vorhergehenden Ansprüche, die ferner einen Wi-Fi-Zugangspunkt (152) für den Nahbereichsdatenaustausch mit der Vorrichtung aufweist.

8. Trackingvorrichtung (112) nach einem der vorhergehenden Ansprüche, wobei der UHF-Sender (128) eine Ausgangsleistung zwischen 100 mW und 10 W aufweist.

9. Trackingvorrichtung (112) nach einem der vorhergehenden Ansprüche, die ferner einen externen Stromanschluss (140) aufweist, der den Prozessor (132), den Empfänger und den Sender mit Strom versorgt.

10. System, das eine Trackingvorrichtung (112) nach einem der Ansprüche 1 bis 9 aufweist und ferner eine Benutzerstation (20) zum Empfangen des Trackingsignals von der Trackingvorrichtung und zum Verwenden der positionsbezogenen Daten.

11. Drahtloses Kanonenschwimmer (gun-float)- und Heckbojen (tail-buoy)-Trackingsystem (1), das das System nach Anspruch 10 aufweist, oder die Trackingvorrichtung (112) nach einem der Ansprüche 1 bis 9.

12. UHF-Antenne für ein Trackingsystem nach einem der vorhergehenden Ansprüche, die einen inneren leitenden Zylinder (130) und einen äußeren leitenden Zylinder (126), der den inneren leitenden Zylinder umgibt, aufweist, wobei der äußere leitende Zylinder einen unteren Rand (127) aufweist, der leitend mit dem inneren leitenden Zylinder verbunden ist;
**dadurch gekennzeichnet, dass** der innere leitende Zylinder (130) hohl ist und dass die UHF-Antenne ferner einen UHF-Sender (128) und/oder -Empfänger aufweist, der/die innerhalb des inneren leitenden Zylinders angeordnet ist/sind.

13. UHF-Antenne nach Anspruch 12, wobei der innere leitende Zylinder (130) wenigstens 50% länger als der äußere leitende Zylinder (126) ist und geschlossene obere und untere Enden aufweist.

## Revendications

1. Dispositif de suivi à distance (112) pour émettre un signal de suivi contenant des données relatives à la position représentant la position momentanée du dispositif de suivi, à une station utilisateur (20), le dispositif de suivi à distance comprenant :
un récepteur GNSS (124) et une antenne GNSS (122) pour recevoir des signaux de positionnement par satellite ;
un processeur (132) pour convertir les signaux de positionnement par satellite en données relatives à la position ; et
un émetteur UHF (128) et une antenne UHF pour transmettre le signal de suivi, l'antenne UHF comprenant un cylindre conducteur intérieur (130) et un cylindre conducteur extérieur (126) espacés du cylindre conducteur intérieur et entourant celui-ci ;
**caractérisé en ce que** le cylindre conducteur intérieur est creux, et en ce qu'un ou plusieurs composants électroniques choisis dans le groupe constitué par le processeur (132), le récepteur GNSS (124), l'émetteur UHF (128), un récepteur UHF, un modem radio UHF, une alimentation électrique (138), une batterie, un convertisseur de puissance, un commutateur, et un moteur, sont situés dans le cylindre conducteur intérieur (130).

2. Dispositif de suivi (112) selon la revendication 1, dans lequel le cylindre conducteur intérieur (130) est plus long que le cylindre conducteur extérieur (126), de préférence au moins 50% plus long, et le cylindre conducteur extérieur présente un bord inférieur (127) qui est relié au cylindre conducteur intérieur.

3. Dispositif de suivi (112) selon la revendication 1 ou 2, **caractérisé en ce que** le cylindre conducteur intérieur (130) présente des extrémités supérieure et inférieure fermées.

4. Dispositif de suivi (112) selon l'une quelconque des revendications précédentes, dans lequel l'émetteur UHF (128) est agencé pour émettre à une longueur d'onde λ et le cylindre conducteur extérieur (126) a une longueur électrique de λ/4.

5. Dispositif de suivi (112) selon l'une quelconque des revendications précédentes, dans lequel, dans la position d'utilisation, l'antenne GNSS (122) est située sur un côté supérieur du dispositif et alignée axialement avec le cylindre conducteur intérieur (130).

6. Dispositif de suivi (112) selon l'une quelconque des revendications précédentes, comprenant un boîtier (136) à l'intérieur duquel se trouvent l'antenne GNSS (122) et le récepteur (124), l'antenne UHF et l'émetteur (128) et le processeur (132), dans lequel le boîtier est de préférence étanche.

7. Dispositif de suivi (112) selon l'une quelconque des revendications précédentes, comprenant en outre un point d'accès Wi-Fi (152) pour échanger à courte portée des données avec le dispositif.

8. Dispositif de suivi (112) selon l'une quelconque des revendications précédentes, dans lequel l'émetteur UHF (128) a une puissance de sortie comprise entre 100 mW et 10 W.

9. Dispositif de suivi (112) selon l'une quelconque des revendications précédentes, comprenant en outre une connexion d'alimentation externe (140) fournissant une alimentation au processeur (132), au récepteur et à l'émetteur.

10. Système comprenant un dispositif de suivi (112) selon l'une quelconque des revendications 1 à 9 et comprenant en outre une station utilisateur (20) pour recevoir le signal de suivi du dispositif de suivi et pour utiliser les données relatives à la position.

11. Système (1) sans fil de suivi d'un flotteur de source impulsive et d'une bouée de queue comprenant le système selon la revendication 10 ou le dispositif de suivi (112) selon l'une quelconque selon les revendications 1 à 9.

12. Antenne UHF pour un système de suivi selon l'une quelconque des revendications précédentes, comprenant un cylindre conducteur intérieur (130) et un cylindre conducteur extérieur (126) entourant le cylindre conducteur intérieur, dans laquelle le cylindre conducteur extérieur a un bord inférieur (127) qui est relié de manière conductrice au cylindre conducteur intérieur ;
**caractérisée en ce que** le cylindre conducteur intérieur (130) est creux, et **en ce que** l'antenne UHF comprend en outre un émetteur (128) et/ou récepteur UHF situé dans le cylindre conducteur intérieur.

13. Antenne UHF selon la revendication 12, **caractérisée en ce que** le cylindre conducteur intérieur (130) est au moins 50% plus long que le cylindre conducteur extérieur (126) et présente des extrémités supérieure et inférieure fermées.
